# EUROPÄISCHE PATENTSCHRIFT

(11) **EP 3 268 907 B1**
(45) Veröffentlichungstag und Bekanntmachung des Hinweises auf die Patenterteilung: **05.07.2023**
(21) Anmeldenummer: 16709032.3
(22) Anmeldetag: 09.03.2016
(51) Int. Cl.: G06Q 10/08, A45C 13/42

(54) **VERFAHREN UND SYSTEM ZUM IDENTIFIZIEREN VON FLUGGEPÄCKSSTÜCKEN**
METHOD AND SYSTEM FOR IDENTIFYING FLIGHT BAGGAGE
PROCÉDÉ ET SYSTÈME D'IDENTIFICATION DE BAGAGES D'AVION

(30) Priorität: 09.03.2015 EP 15158310
(43) Veröffentlichungstag der Anmeldung: 17.01.2018
(73) Patentinhaber: RIMOWA ELECTRONIC TAG GmbH, 50829 Köln (DE)
(72) Erfinder: MORSZECK, Dieter, 50829 Köln (DE); REH, Jan, 50829 Köln (DE)
(74) Vertreter: dompatent von Kreisler Selting Werner - Partnerschaft von Patent- und Rechtsanwälten mbB
(86) Internationale Anmeldenummer: PCT/EP2016/054993
(87) Internationale Veröffentlichungsnummer: WO 2016/142411

(56) Entgegenhaltungen:
- EP-A1- 2 737 820
- WO-A1-2011/093780
- WO-A1-2012/152745
- GB-A- 2 500 054
- US-A1- 2012 052 879
- US-A1- 2014 291 132
- US-A1- 2015 062 879
- John Anderson: "Electronic luggage tag lets travelers check-in bags from home", , 12. Februar 2016 (2016-02-12), XP055270644, Gefunden im Internet: URL:http://www.gizmag.com/rimowa-electroni c-tag/41794/ [gefunden am 2016-05-04]

## Beschreibung

Die Erfindung betrifft ein Verfahren und ein System zum Identifizieren von Fluggepäckstücken nach Anspruch 1 und Anspruch 4, sowie ein Fluggepäckstück nach Anspruch 6.

Es sind Verfahren bzw. Systeme zum Identifizieren von Fluggepäckstücken, insbesondere Koffern, bekannt, bei denen das Fluggepäckstück mittels einer Eincheckeinrichtung, insbesondere Handy, Computer, Check-In Schalter oder Check-In Automat, eingecheckt werden. Für das Fluggepäckstück werden dann sogenannte "baggage tags" ausgedruckt und an dem Fluggepäckstück befestigt. Auf den baggage tags sind für den Flug notwendige Flug- und Personendaten dargestellt. Das mit dem baggage tag versehene Gepäckstück kann dann an einer Gepäckabgabeeinrichtung, insbesondere einem Gepäckabgabeschalter, einem Check-In Schalter mit Gepäckabgabe oder einem Self-Service Drop Off Schalter, abgegeben werden.

Ferner ist beispielsweise aus WO 2012/152745 A1 ein Fluggepäckstück mit einer integrierten elektronischen Displayeinrichtung bekannt, auf welche Flug- und Personendaten von einer Eincheckeinrichtung übertragen werden können und welche die Daten auf einer Anzeigefläche zur Identifizierung des Fluggepäcks darstellt.

Aus EP 2 737 820 A1 ist ebenfalls ein Fluggepäckstück mit einer integrierten elektronischen Displayeinrichtung bekannt, auf welche Flug- und Personendaten übertragen werden können.

Es besteht jedoch zunehmend Bedarf das Verfahren zum Identifizieren von Fluggepäckstücken weiter zu automatisieren und zu vereinfachen.

Der Erfindung liegt daher die Aufgabe zugrunde, ein Verfahren und ein System zum Identifizieren von Fluggepäckstücken sowie ein Fluggepäckstück zu schaffen, das automatisiert und vereinfacht ist.

Zur Lösung dieser Aufgabe dienen die Merkmale der Ansprüche 1, und 6.

Bei einem Verfahren zum Identifizieren eines Fluggepäckstücks gemäß der vorliegenden Erfindung sind vorteilhafterweise die folgenden Schritte vorgesehen:
- Aktivieren einer in dem Fluggepäckstück integrierten, als elektronischer tag ausgeführten, elektronischen Displayeinrichtung zum Versetzen des Displays in Empfangsbereitschaft,
- Übertragen von für einen Flug notwendigen Flug- und Personendaten von einer Eincheckeinrichtung an die Displayeinrichtung,
   - grafisches Darstellen der Flug- und Personendaten auf einer Anzeigefläche der Displayeinrichtung
   - wobei die elektronische Displayeinrichtung mittels manueller Betätigung einer an dem Fluggepäckstück angeordneten Aktivierungseinrichtung aktiviert wird,
   - wobei die Aktivierungseinrichtung im Inneren des Fluggepäckstücks (1) angeordnet ist,
   - die Aktivierungseinrichtung durch eine Abschirmeinrichtung vor ungewollter Betätigung geschützt ist, wobei die Abschirmeinrichtung durch einen der Aktivierungseinrichtung vorgelagerten Kanal mit einer Mündung gebildet ist und die Mündung des Kanals der Abschirmeinrichtung im geschlossenen Zustand des Gepäckstücks verdeckt ist..

Gemäß dem vorliegenden Verfahren können Flug- und Personendaten auf einer in dem Gepäckstück integrierten, als elektronischer tag ausgeführten Displayeinrichtung dargestellt werden. Auch können Flug- und Personendaten an die Displayeinrichtung übertragen werden. Ferner bietet das Verfahren gemäß der vorliegenden Erfindung den Vorteil, dass die Flug- und Personendaten nicht manipuliert werden können, da diese erst nach Aktivieren der Displayeinrichtung, bei der die Displayeinrichtung in Empfangsbereitschaft gesetzt wird, übertragen werden.

Das vorliegende Verfahren bietet somit den Vorteil, dass die Flug- und Personendaten, die auf dem elektronischen tag, d.h. der Displayeinrichtung, dargestellt sind, genau so sicher vor Manipulierungen geschützt sind wie die auf einem herkömmlichen Papier baggage tag dargestellten Flug- und Personendaten.

Die Displayeinrichtung kann nur innerhalb eines definierten Zeitfensters nach Aktivierung der Displayeinrichtung in Empfangsbereitschaft sein.

Dies hat einen zusätzlichen Sicherheitsvorteil, da die Anzeigefläche auf der Displayeinrichtung bzw. auf dem elektronischen tag, nur innerhalb eines definierten Zeitfensters nach Aktivierung der Displayeinrichtung verändert werden kann.

Die Eincheckeinrichtung kann ein Handy, ein Computer, ein Check-In Schalter oder ein Check-In Automat sein. An dieser Eincheckeinrichtung kann ein Fluggast wie bisher üblich einchecken.

Das Fluggepäckstück mit Displayeinrichtung, auf der die Flug- und Personendaten dargestellt sind, kann an einer Gepäckabgabeeinrichtung abgegeben werden. Die Gepäckabgabeeinrichtung kann ein Gepäckabgabeschalter, ein Check-In Schalter mit Gepäckabgabe oder ein Self-Service Drop off Schalter sein.

Die elektronische Displayeinrichtung wird mittels manueller Betätigung der an dem Fluggepäckstück angeordneten Aktivierungseinrichtung aktiviert. Auch dies ist ein weiterer Sicherheitsvorteil, da die Aktivierung nur manuell erfolgen kann. Die Aktivierungseinrichtung kann vorzugsweise an der Displayeinrichtung angeordnet sein.

Die Aktivierungseinrichtung ist im Inneren des Fluggepäckstücks angeordnet. Auch dies ist ein weiterer Sicherheitsvorteil, da die Displayeinrichtung nur von dem Inhaber des Fluggepäckstücks aktiviert werden kann, da nur dieser das Schloss des Fluggepäckstücks öffnen kann.

Es kann auch vorgesehen sein, dass die Displayeinrichtung nur die Übertragung der Daten von bestimmten bzw. zuvor festgelegten Eincheckeinrichtungen erlaubt.

Das Gepäckstück kann an einer Gepäckabgabeeinrichtung eines Flughafens, insbesondere einem Gepäckabgabeschalter, Check-In Schalter mit Gepäckabgabe oder Self-Service Drop Off Schalter, abgegeben werden.

Das Fluggepäckstück kann einen Gepäckstückkörper aufweisen, in dem die Displayeinrichtung integriert ist.

Die Aktivierungseinrichtung wird durch eine Abschirmeinrichtung vor ungewollter Betätigung geschützt.

Bei einer Anordnung der Aktivierungseinrichtung im Bereich des Fluggepäckstückkörpers oder der Displayeinrichtung insbesondere bei Ausgestaltung der Aktivierungseinrichtung in Form eines Knopfes verhindert die Abschirmeinrichtung die ungewollte Betätigung der Aktivierungseinrichtung. Durch eine Anordnung des Knopfes der Aktivierungseinrichtung innerhalb des Koffers wird dieser durch die Abschirmeinrichtung vor unbeabsichtigter Betätigung durch ein Anstoßen mit sich innerhalb des Fluggepäckstücks befindlichen Gegenstände verhindert. Während des Transportes des Gepäckstücks ist es denkbar, dass sich die innerhalb des Gepäckstücks befindlichen Gegenstände verschieben und je nach Bewegung und Lagerung des Koffers gegebenenfalls die Aktivierungseinrichtung auslösen könnten. Durch die Abschirmeinrichtung wird ein unmittelbarer Zugriff auf die Aktivierungseinrichtung verhindert und das unbeabsichtigte Betätigen vermieden.

Die Maße und die Anordnung der grafischen Anzeige der Flug- und Personendaten auf der Anzeigefläche der Displayeinrichtung kann den Maßen und der Anordnung der Anzeige auf einem herkömmlichen Papier baggae tag entsprechen.

Die Displayeinrichtung kann ein stromloses Display aufweisen. Ein stromloses Display ist ein Display, das die Daten dauerhaft ohne Stromzufuhr anzeigen kann. Es wird lediglich Strom für das Ändern der Anzeige benötigt. Solche Displays werden auch bi-stable Displays genannt. Für die Versorgung des Displays mit Strom für das Ändern der Anzeige kann eine Batterie vorgesehen sein.

Die Displayeinrichtung kann im Wesentlichen plan mit der Außenfläche des Fluggepäcks verlaufen.

Die Flug- und Personendaten können mittels Bluetooth übertragen werden. Die Flug- und Personendaten entsprechen den Daten, die auf einem herkömmlichen Papier baggage tag dargestellt werden. Die Flug- und Personendaten können auf der Anzeigefläche der Displayeinrichtung grafisch dargestellt werden. Die grafische Darstellung der Flug- und Personendaten auf der Anzeigefläche der Displayeinrichtung entspricht somit den dargestellten Daten auf einem herkömmlichen Papier baggage tag.

Bei innereuropäischen Flügen können zwei grüne Streifen im definierten Abstand vorzugsweise an den Längskanten der Displayeinrichtung angezeigt werden. Die Anzeigefläche der Displayeinrichtung weist vorzugsweise eine rechteckige Fläche auf, die vorzugsweise zwei Quer- und zwei Längskanten aufweist.

Die auf der Anzeigefläche der Displayeinrichtung angezeigte grafische Darstellung der Flug- und Personendaten kann für die automatische Gepäckbeförderung eingescannt werden. Die auf der Anzeigefläche der Displayeinrichtung dargestellten Flug- und Personendaten können somit genauso wie der herkömmliche Papier baggage tag für die Gepäckbeförderung eingescannt werden. Die automatische Gepäckbeförderung muss somit nicht an den Transport mit Fluggepäck, die eine als elektronischer tag ausgeführte Displayeinrichtung aufweisen, angepasst werden.

Bei der Abgabe des Fluggepäckstücks kann mittels eines an der Displayeinrichtung angeordneten RFID-Chips automatisch erfasst werden, ob eine Displayeinrichtung mit angezeigten Flug- und Personendaten vorhanden ist. Auf diese Weise kann das Verfahren zur Abgabe des Fluggepäckstücks weiter automatisiert werden. Bei einem Self-Service Drop Off Schalter wird beispielsweise automatisch erkannt, dass ein Fluggepäckstück mit einer Displayeinrichtung und einem darauf angezeigten Flug- und Personendaten vorliegt.

Es kann eine automatische elektronische Bestätigung über die Abgabe des Fluggepäckstücks versendet werden. Die elektronische Bestätigung kann beispielsweise an die Eincheckeinrichtung gesendet werden.

Das Fluggepäckstück kann ein Koffer sein und die Displayeinrichtung kann an einer Längsseite des Koffers angeordnet sein, an der auch ein Handgriff angeordnet ist. Auf diese Weise werden die auf der Displayeinrichtung angezeigten Flug- und Personendaten an einer ähnlichen Stelle angeordnet wie der herkömmliche Papier baggage tag, der üblicherweise an dem Handgriff an der Längsseite des Koffers angeordnet wird.

Das Display der Displayeinrichtung kann aus einem Material bestehen, das Kunststoff aufweist und flexibel ist. Auf diese Weise wird verhindert, dass das Display der Displayeinrichtung während der Beförderung des Fluggepäckstücks zerbricht und der elektronische Tag nicht mehr angezeigt wird.

Gemäß der vorliegenden Erfindung kann ferner ein System zum Identifizieren eines Fluggepäckstücks, insbesondere eines Koffers, vorgesehen sein, das die folgenden Merkmale aufweist:
- eine Eincheckeinrichtung, auf der für einen Flug notwendige Flug- und Personendaten speicherbar sind,
- ein Fluggepäckstück mit als elektronischer tag ausgeführter, integrierter Displayeinrichtung,
- eine Aktivierungseinrichtung zum Aktivieren der in dem Fluggepäckstück integrierten Displayeinrichtung, um diese in Empfangsbereitschaft zu setzen, wobei während der Empfangsbereitschaft Flug- und Personendaten von der Eincheckeinrichtung an die Displayeinrichtung übertragbar ist,
- wobei die Flug- und Personendaten auf einer Anzeigefläche der Displayeinrichtung darstellbar sind,
- wobei die Flug- und Personendaten auf einer Anzeigefläche der Displayeinrichtung darstellbar ist,
- wobei die Aktivierungseinrichtung im Inneren des Gepäckstücks angeordnet ist und manuell betätigbar ist,
- wobei eine Abschirmeinrichtung vorgesehen ist, die die Aktivierungseinrichtung vor unbeabsichtigter Betätigung schützt, wobei die Abschirmeinrichtung durch einen der Aktivierungseinrichtung vorgelagerten Kanal mit einer Mündung gebildet ist und die Mündung des Kanals der Abschirmeinrichtung im geschlossenen Zustand des Gepäckstücks verdeckt ist.

Die Aktivierungseinrichtung kann an der Displayeinrichtung, angeordnet sein.

Die Aktivierungseinrichtung kann ein an der Displayeinrichtung angeordneter Knopf sein.

Bei dem Knopf kann es sich dabei um Drucktaster oder Schiebetaster handeln, über welche die Displayeinrichtung in Empfangsbereitschaft gesetzt wird.

Die Aktivierungseinrichtung ist im Inneren des Gepäckstücks angeordnet sein und manuell betätigbar.

Am Gepäckstück ist eine Abschirmeinrichtung angeordnet, die die Aktivierungseinrichtung, vorzugsweise den Knopf vor unbeabsichtigter Betätigung, schützt.

Gemäß der vorliegenden Erfindung kann ferner ein Fluggepäckstück mit einem Gepäckstückkörper vorgesehen werden, wobei eine Displayeinrichtung am Gepäckstückkörper angeordnet ist und wobei der Gepäckstückkörper öffen- und schließbar ist, wobei eine Aktivierungseinrichtung mittels der die Displayeinrichtung aktivierbar ist am Gepäckstückkörper, vorzugsweise an der Displayeinrichtung, angeordnet ist.

Der Gepäckstückkörper kann dabei aus mindestens einem ersten Gepäckstückteil und mindestens einem zweiten Gepäckstückteil gebildet sein, worüber das Fluggepäck öffnen- und schließbar ist.

Die Anordnung der Aktivierungseinrichtung im Inneren des Gepäckstückkörpers weist insbesondere den Vorteil auf, dass lediglich der befugte Gepäckstückinhaber, welcher das Fluggepäckstück beispielsweise durch Entriegeln von Schlössern öffnen kann, alleinigen Zugriff auf die Aktivierungseinrichtung hat. Insbesondere wird damit ein Zugriff bzw. eine Betätigung der Aktivierungseinrichtung durch unbefugte Dritte beispielsweise während des Transports des Gepäckstücks vermieden. Generell wird bei Anordnung der Aktivierungseinrichtung in Inneren des Gepäckstücks diese vor Einwirkung von Außen geschützt.

Die Aktivierungseinrichtung kann ein an der Displayeinrichtung angeordneter Knopf sein.

Am Fluggepäckstück ist eine Abschirmeinrichtung vorgesehen sein, welche die Aktivierungseinrichtung vor ungewollter Betätigung schützt.

Bei der Abschirmeinrichtung handelt es sich beispielsweise um einen zusätzlichen Gegenstand, welcher beispielsweise im geschlossen Zustand des Fluggepäckstücks dem Knopf vorgelagert ist und damit den Zugriff auf den Knopf sicher verhindert. Im geöffneten Zustand gibt der zusätzliche Gegenstand den Zugriff auf den Knopf wieder frei, so dass dieser betätigt werden kann.

Die Abschirmeinrichtung kann dabei am Gepäckstückkörper und/oder der Displayeinrichtung angeordnet sein.

Die Abschirmeinrichtung ist durch einen der Aktivierungseinrichtung vorgelagerten Kanal mit einer Mündung gebildet. Die Ausführung der Abschirmeinrichtung als Kanal bietet dabei den Vorteil, dass der Zugang zu der Aktivierungseinrichtung insbesondere dem Knopf lediglich über den Kanal möglich ist.

Der Verlauf des Kanals und die Geometrie der Mündung des Kanals können dabei derart ausgebildet sein, dass lediglich der Zugang zu der Aktivierungseinrichtung mit einem speziell geformten Gegenstand möglich ist. Insbesondere können die Abmessungen und der Verlauf an einen menschlichen Finger angepasst sein.

Der Kanal kann dabei geradlinig oder ein- bzw. mehrfach gekrümmt verlaufen. Durch eine derartige Ausgestaltung des der Aktivierungseinrichtung vorgelagerten Kanals wird ebenfalls ein unbeabsichtigtes Betätigen der Aktivierungseinrichtung verhindert. Der Kanal führt dabei von der Mündung an einem ersten Ende zu der Aktivierungseinrichtung an dem gegenüberliegenden Ende. Der Kanal ist dabei lediglich über die Mündung zugänglich.

Die Mündung des Kanals der Abschirmeinrichtung ist im geschlossenen Zustand des Gepäckstücks verdeckt. Diese Ausgestaltungsform hat den besonderen Vorteil, dass die Aktivierungseinrichtung, insbesondere der Knopf, lediglich bei geöffnetem Gepäckstück zugänglich und damit betätig- bzw. aktivierbar ist.

Der Kanal der Abschirmeinrichtung kann an dem ersten Gepäckstückteil des Gepäckstückkörpers angeordnet sein und die Mündung des Kanals im geschlossenen Zustand des Gepäckstücks durch das zweite Gepäckstückteil verdeckt sein. Hierbei kann es vorgesehen sein, dass die Mündung des Kanals beispielsweise durch eine Innenfläche des zweiten Gepäckstückteils im geschlossenen Zustand verschlossen ist. Wenn nun das Gepäckstück geöffnet wird, entfernt sich das zweite Gepäckstückteil von dem ersten Gepäckstückteil und gibt dabei die Mündung des Kanals der Abschirmeinrichtung frei. In der Folge ist die Mündung des Kanals der Abschirmeinrichtung im geöffneten Zustand des Gepäckstücks zugänglich und die Aktivierungseinrichtung kann über den Kanal betätigt werden.

Die Mündung kann im geschlossenen Zustand durch eine Verschlusseinrichtung verdeckt sein.

Die Verschlusseinrichtung kann dabei an dem zweiten Gepäckstückteil des Gepäckstücks angeordnet sein.

Insbesondere ist eine Anordnung denkbar, wobei die Abschirmeinrichtung mit dem Kanal und der Mündung an dem ersten Gepäckstückteil des Gepäckstücckörpers angeordnet ist und die Verschlusseinrichtung an dem zweiten Gepäckstückteil gegenüberliegend angeordnet ist. Die Verschlusseinrichtung weist dabei eine an die Mündung des Kanals der Abschirmeinrichtung angepasste Geometrie auf. Im geschlossenen Zustand des Gepäckstücks kann die Verschlusseinrichtung in die Mündung eingreifen oder umfassen und diese verschließen. Wenn nun das Gepäckstück geöffnet wird, entfernt sich der erste Gepäckstückteil von dem zweiten Gepäckstückteil und folglich wird die Verschlusseinrichtung von der Mündung des Kanals der Abschirmeinrichtung entfernt, so dass diese frei zugänglich ist.

Im Folgenden werden unter Bezugnahme auf die Zeichnungen Ausführungsbeispiele der Erfindung näher erläutert:
- Fig. 1: zeigt ein System zum Identifizieren von Fluggepäckstück,
- Fig. 2: zeigt ein alternatives Ausführungsbeispiel,
- Fig. 3: zeigt ein weiteres alternatives Ausführungsbeispiel,
- Fig. 4: zeigt ein weiteres alternatives Ausführungsbeispiel,
- Fig. 5: zeigt die Displayeinrichtung,
- Fig. 6: zeigt eine Draufsicht auf eine Displayeinrichtung eines Fluggepäckstücks,
- Fig. 7: zeigt eine Gepäckabgabeeinrichtung,
- Fig. 8: zeigt eine Außenansicht eines Ausschnitts eines Gepäckstücks im geöffneten Zustand mit Abschirmeinrichtung,
- Fig. 9: zeigt eine Innenansicht eines Ausschnitts eines Gepäckstücks im geöffneten Zustand mit Abschirmeinrichtung,
- Fig. 10: zeigt eine Innenansicht eines Ausschnitts eines Gepäckstücks im geschlossenen Zustand mit Abschirmeinrichtung,
- Fig. 11: zeigt die Innenansicht eines alternativen Ausführungsbeispiels eines Ausschnitts eines Gepäckstücks im geöffneten Zustand mit alternativer Abschirmeinrichtung,
- Fig. 12: zeigt die Innenansicht eines alternativen Ausführungsbeispiels eines Ausschnitts eines Gepäckstücks im geschlossenen Zustand mit alternativer Abschirmeinrichtung.

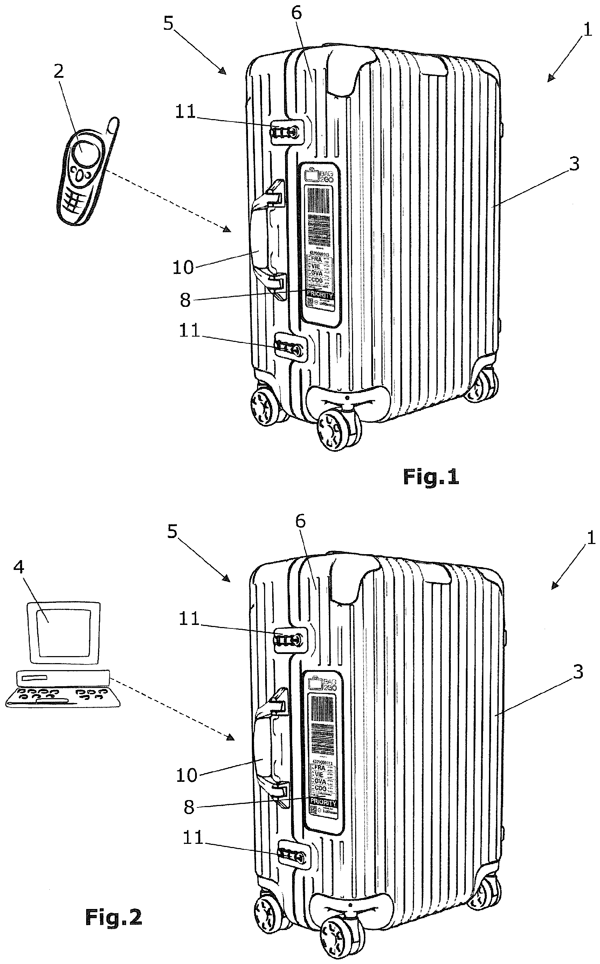

Fig. 1 zeigt ein System 5 zum Identifizieren eines Fluggepäckstücks 1. Das dargestellte Fluggepäckstück 1 ist vorzugsweise ein Koffer. Das Fluggepäckstück 1 weist im dargestellten Ausführungsbeispiel einen Fluggepäckkörper 3 auf. Im Fluggepäckkörper 3 ist eine Displayeinrichtung 8 integriert. Diese Displayeinrichtung 8 ist als elektronischer tag ausgeführt. Ferner ist eine Eincheckeinrichtung 2 vorgesehen. Die in Fig. 1 dargestellte Eincheckeinrichtung 2 ist ein Handy. Die für einen Flug notwendigen Flug- und Personendaten sind auf der Eincheckeinrichtung 2 speicherbar. Diese können auch nur vorübergehend und kurzzeitig auf der Eincheckeinrichtung 2 speicherbar sein. Es ist eine in Fig. 1 nicht dargestellte Aktivierungseinrichtung 40 zum Aktivieren der in dem Fluggepäckstück 1 integrierten Displayeinrichtung 8 vorgesehen, um die Displayeinrichtung in Empfangsbereitschaft zu setzen. Während der Empfangsbereitschaft können Flug- und Personendaten von der Eincheckeinrichtung 2 an die Displayeinrichtung 8 übertragen werden und auf einer Anzeigefläche 26 der Displayeinrichtung dargestellt werden.

Bei dem Verfahren zum Identifizieren eines Fluggepäckstücks 1 wird zunächst die in dem Fluggepäckstück integrierte, als elektronische tag ausgebildete, elektronische Displayeinrichtung 8 aktiviert, um die Displayeinrichtung in Empfangsbereitschaft zu setzen. Dann erfolgt die Übertragung von für den Flug notwendige Flug- und Personendaten von der Eincheckeinrichtung 2 an die Displayeinrichtung 8. Im darauffolgenden Schritt werden die Flug- und Personendaten auf der Anzeigefläche 26 der Displayeinrichtung 8 graphisch dargestellt.

Die Displayeinrichtung 8 ist, wie im dargestellten Ausführungsbeispiel, vorzugsweise an einer Längsseite 6 des Gepäckstücks 1 angeordnet, an der auch ein Handgriff 10 angeordnet ist. Auf diese Weise sind die Flug- und Personendaten, die auf der Displayeinrichtung 8 dargestellt werden, an einer ähnlichen Stelle angeordnet, wie ein herkömmlicher Papier-baggage-tag, der üblicherweise an einem Handgriff 10 befestigt wird. Die Aktivierungseinrichtung 40 kann an dem Gepäckstück 1 angeordnet sein. Die Aktivierungseinrichtung kann beispielsweise an dem Handgriff 10, an den Schlössern, an dem Gepäckstückkörper 3 oder an der Displayeinrichtung 8 angeordnet sein. Vorzugsweise ist die Aktivierungseinrichtung 40 im Inneren des Gepäckstücks 1 angeordnet. Dies hat den zusätzlichen Vorteil, dass lediglich der Besitzer des Gepäckstücks 1 Zugriff auf die Aktivierungseinrichtung hat. Auf diese Weise kann kein Unbefugter die Flug- und Personendaten auf der Displayeinrichtung 8 verändern. Die Übertragung der Flug- und Personendaten von der Eincheckeinrichtung 2 auf die Displayeinrichtung 8 kann mittels Bluetooth erfolgen.

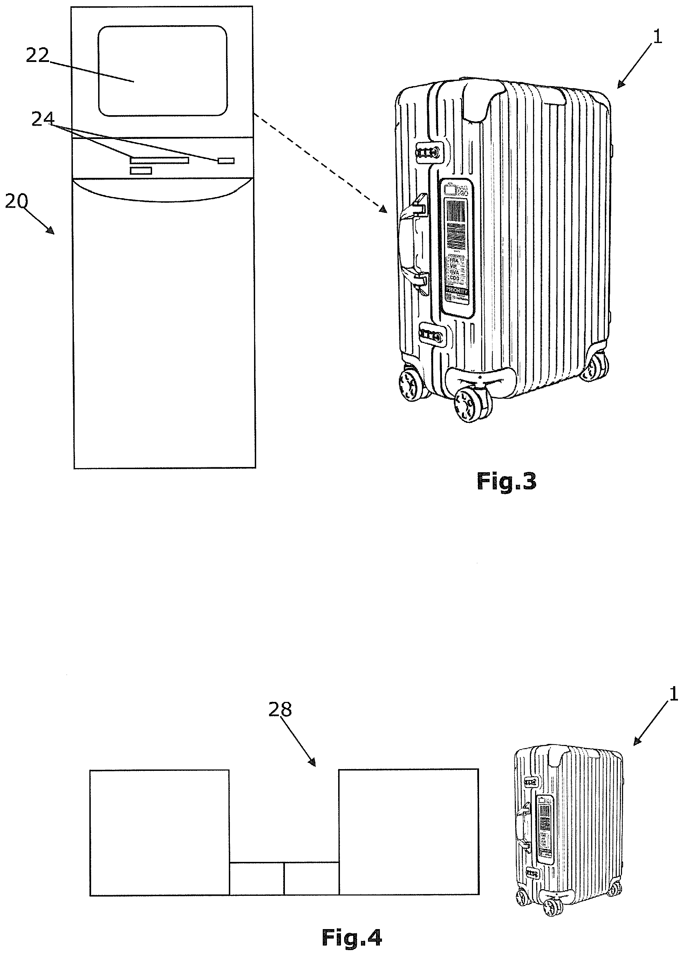

In den Fign 2 - 4 sind weitere alternative Ausführungsbeispiele dargestellt. Diese unterscheiden sich dadurch, dass die Eincheckeinrichtung nicht wie in Figur 1 ein Handy 2 ist, sondern in Fig. 2 ein Computer 4, in Figur 3 ein Check-In-Automat 20, mit dem das Einchecken über die Tastatur 24 und den Bildschirm 22 erfolgt. In Fig. 4 ist ein Check-In-Schalter 28 dargestellt, bei dem Personal das Gepäckstück 1 eincheckt. Dabei muss jedoch das Personal nicht wie üblich, den Papier-baggage-tag an dem Gepäckstück 1 anbringen sondern kann die Flug- und Personendaten von einem Computer der am Check-In-Schalter 28 angeordnet ist, direkt auf das Gepäckstück 1 übertragen.

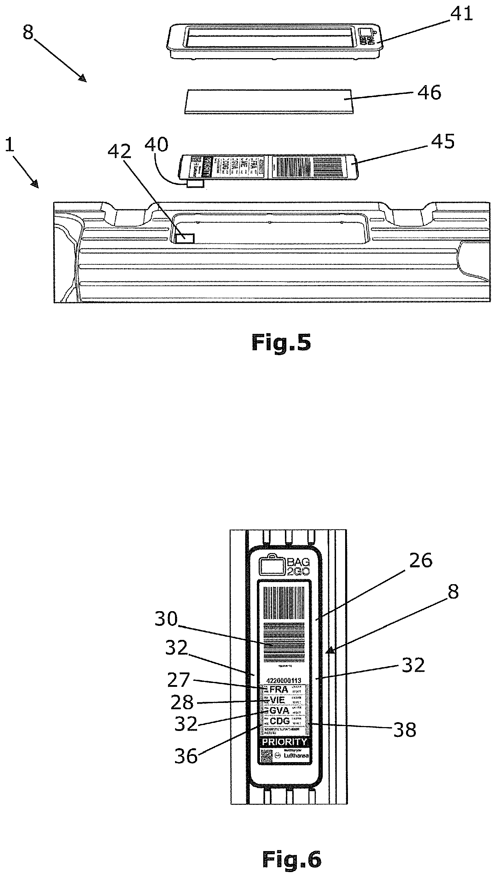

In Fig. 5 ist eine Explosionsdarstellung der Displayeinrichtung 8 mit einem Teil des Gepäckstücks 1 dargestellt. Die Displayeinrichtung 8 weist ein Display 45 auf, das in einem Gehäuse 41 angeordnet ist. Das Display 45 ist mit einem Schutzglas oder einer Schutzfolie 46 bedeckt. Ferner weist die Displayeinrichtung 8 im dargestellten Ausführungsbeispiel die Aktivierungseinrichtung 40 auf. Die Aktivierungseinrichtung 40 kann eine manuell betätigbare Aktivierungseinrichtung sein. Diese Aktivierungseinrichtung 40 kann im dargestellten Ausführungsbeispiel ein Knopf sein, der manuell vom Inneren des Gepäckstücks 1 her betätigt werden kann. Dabei kann die Aktivierungseinrichtung 40 durch ein Loch 41 im Gepäckstückkörper 3 in das Innere des Gepäckstücks reichen.

Es ist auch möglich, dass die Displayeinrichtung 8 nur die Übertragung der Flug- und Personendaten von bestimmten bzw. zuvor festgelegten Eincheckeinrichtungen 2, 4, 26, 28 erlaubt.

In Fig. 6 ist die Displayeinrichtung 8 näher dargestellt. Es ist eine Draufsicht auf die Displayeinrichtung 8 und die Anzeigefläche 26 der Displayeinrichtung 8. In der Anzeigefläche 26 der Displayeinrichtung 8 sind die Flug- und Personendaten als Strichcodes 30 und Abkürzungen 27, 28, 32 dargestellt. Ferner kann in der Displayeinrichtung 26 zwei vorzugsweise an den Längskanten 32 angeordnete grüne Streifen 36, 38 angeordnet sein. Diese grünen Streifen 36, 38 können insbesondere bei innereuropäischen Flügen angezeigt werden. Das Display 45 der Displayeinrichtung 8 ist vorzugsweise ein stromloses Display. Dies bedeutet, dass das Display 45 kein Strom zum dauerhaften Anzeigen der Flug- und Personendaten benötigt. Es wird lediglich Strom beim Ändern des Angezeigten benötigt. Dafür kann die Displayeinrichtung 8 eine Batterie 44 aufweisen.

Eine manuelle Aktivierungseinrichtung hat den zusätzlichen Vorteil, dass bei einem stromlosen Display die Displayeinrichtung 8 erst nach Betätigen der Aktivierungseinrichtung in Empfangsbereitschaft gesetzt wird und nur in dieser Zeit Strom benötigt.

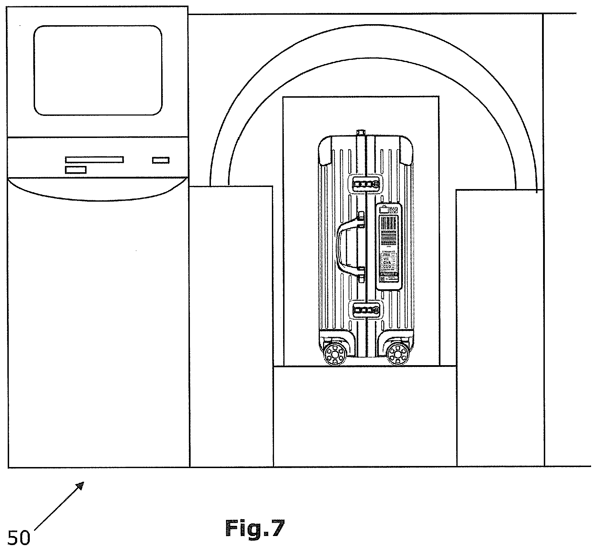

In Fig. 7 ist eine Gepäckabgabeeinrichtung 50 dargestellt. Im dargestellten Ausführungsbeispiel in Figur 7 ist ein Self-Service-Drop-Off-Schalter dargestellt. Bei diesem Schalter kann der Fluggast das Gepäckstück selbst abgeben. Bisher war es dafür nötig, dass ein herkömmlicher Papier-baggage-tag ausgedruckt wird und an dem Gepäckstück von dem Fluggast angebracht werden muss. Das vorliegende System und das vorliegende Verfahren haben den Vorteil, dass die Abgabe des Fluggepäckstücks wesentlich vereinfacht wird, da die Flug- und Personendaten bereits zuvor von dem Fluggast selbst auf die Displayeinrichtung übertragen werden oder direkt vor Ort die Übertragung elektronisch erfolgt. Ein umständliches Anbringen des Klebestreifens des Papier-baggage-tags ist nicht nötig. Der Drop-Off-Schalter kann mittels eines in der Displayeinrichtung angeordneten RFID-Chips automatisch erkennen, dass eine Displayeinrichtung mit angezeigten Flug- und Personendaten aufgelegt worden ist. Alternativ kann die Scaneinrichtung des Self-Drop-Off-Schalters die Anzeigefläche 26 der Displayeinrichtung 8 scannen, um zu erkennen, dass eine Displayeinrichtung mit angezeigten Flug- und Personendaten in dem Fluggepäckstück 1 angeordnet ist.

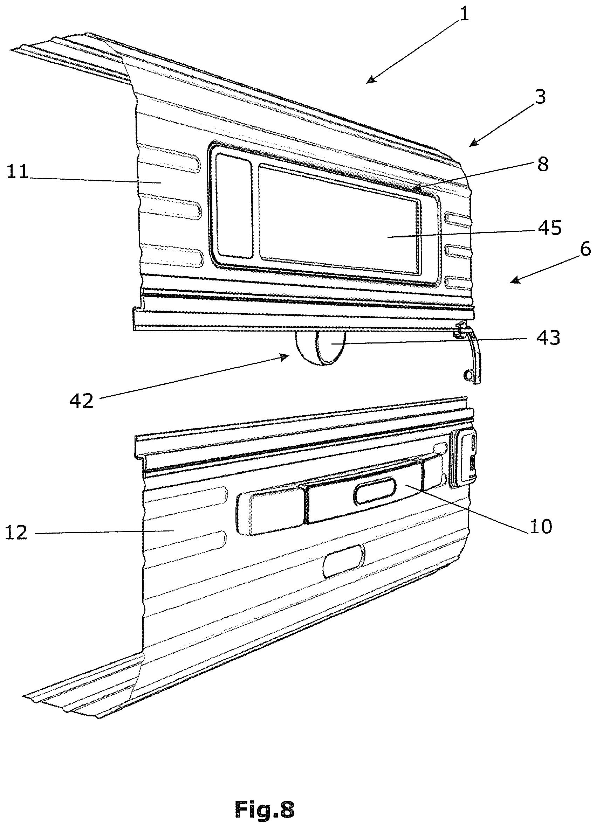

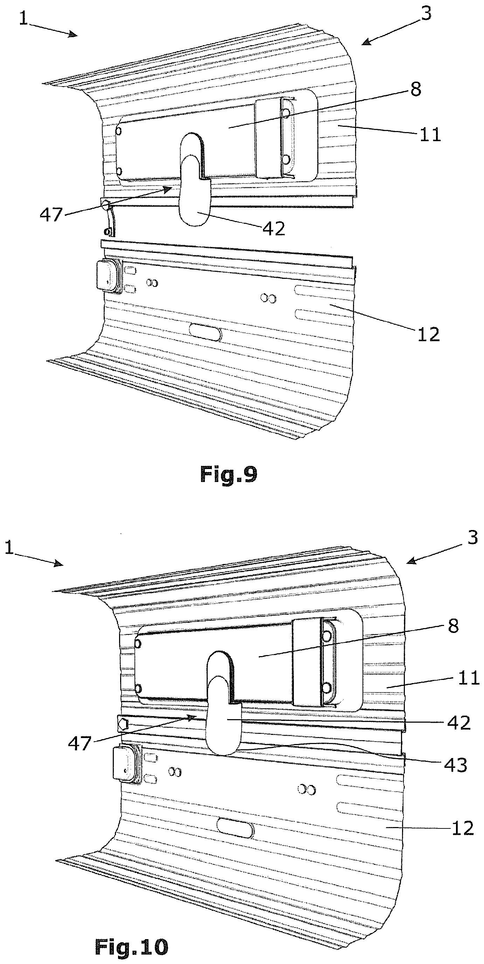

In Fig. 8 und Fig. 9 ist ein Ausschnitt eines Gepäckstückkörpers 3 eines Fluggepäckstücks 1 dargestellt. Der Gepäckstückkörper 3 weist dabei ein erstes Gepäckstückteil 11 und ein zweites Gepäckstückteil 12 auf, wobei an der Außenseite des zweiten Gepäckstückteils 12 ein Handgriff 10 angeordnet sein kann. In dem ersten Gepäckstückteil 11 kann eine Displayeinrichtung 8 mit einem Display 45 integriert sein. Die integrierte Displayeinrichtung 8 verfügt in dem dargestellten Ausführungsbeispiel auf der Innenseite über eine nicht dargstellte Aktivierungseinrichtung 40, welche gegen ein unbeabsichtigtes Betätigen durch eine Abschirmeinrichtung 42 geschützt ist. Die Aktivierungseinrichtung 40 kann ein Knopf sein. Die Aktivierungseinrichtung 40 liegt unterhalb der dargestellten Abschirmeinrichtung 42. Die Abschirmeinrichtung 42 weist einen von der Mündung 43 zu der Aktivierungseinrichtung 40 führenden Kanal 47 auf. Die Fign. 8 und 9 zeigen das Fluggepäckstück 1 im geöffneten Zustand, wobei die Mündung 43 der Abschirmeinrichtung 42 zugänglich ist. Die vorzugsweise manuell betätigbare Aktivierungseinrichtung 40 kann dabei über das Hinführen eines Fingers über die Mündung 43 durch den Kanal 47 zu der Aktivierungseinrichtung 40 betätigt werden.

In der Fig. 10 ist das Gepäckstück im geschlossenen Zustand in der Innenansicht gezeigt, wobei die Mündung 43 der Abschirmeinrichtung 42 in dem dargestellten Ausführungsbeispiel durch die Innenseite des zweiten Gepäckstückteils 12 verdeckt bzw. verschlossen ist. Damit ist eine Betätigung der Aktivierungseinrichtung 40 mittels Eingreifen in den Kanal 47 der Abschirmeinrichtung 42 nicht mehr möglich. Ebenfalls wird die Aktivierungseinrichtung durch die Abschirmeinrichtung 42 gegen ein unbeabsichtigtes Betätigen der Aktivierungseinrichtung durch beispielsweise innerhalb des Gepäckstückkörpers 3 befindliche Gegenstände geschützt.

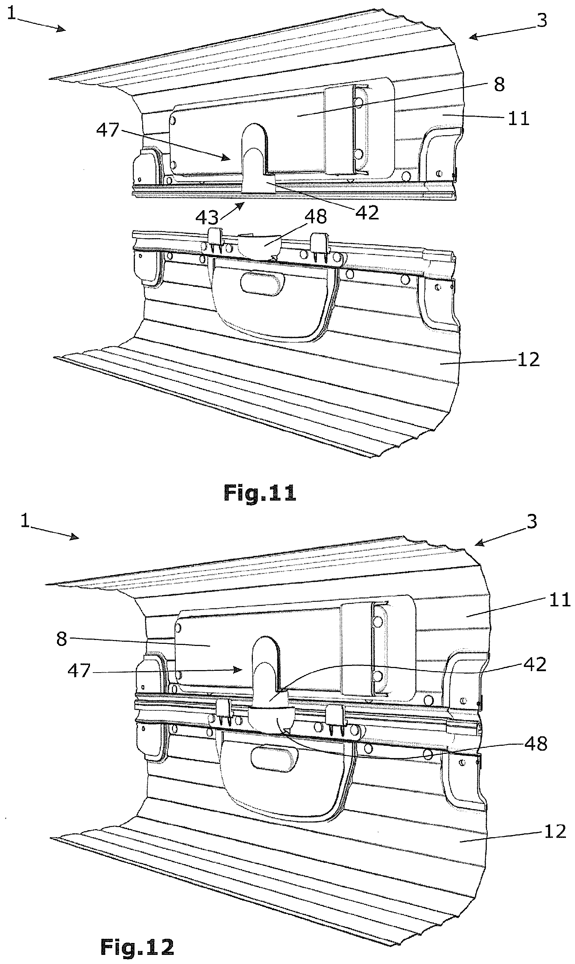

Die Fig. 11 zeigt die Innenansicht eines alternativen Ausführungsbeispiels eines Gepäckstückkörpers 3, wobei an dem ersten Gepäckstückteil 11 die Displayeinrichtung 8 integriert ist. Die Displayeinrichtung 8 weist dabei eine unterhalb der Abschirmeinrichtung 42 angeordnete nicht dargestellte Aktivierungseinrichtung 40 auf. Die Aktivierungseinrichtung 40 ist dabei über die Mündung 43 und den Kanal 47 der Abschirmeinrichtung 42 zugänglich. An dem zweiten Gepäckstückteil 12 ist gegenüberliegend der Mündung 43 der Abschirmeinrichtung 42 eine Verschlusseinrichtung 48 angeordnet. Die Verschlusseinrichtung 48 ist dabei an die Geometrie der Mündung 43 der Abschirmeinrichtung 42 angepasst.

Die Fig. 12 zeigt die Innenansicht des alternativen Ausführungsbeispiels des Gepäckstücks 1 im geschlossenen Zustand. Die Verschlusseinrichtung 48 verdeckt bzw. umschließt die Mündung 43 des Kanals 47 der Abschirmeinrichtung 42. Damit ist im geschlossenen Zustand des Gepäckstücks 1 die Aktivierungseinrichtung 40 nicht mehr zugänglich, so dass eine Betätigung der Aktivierungseinrichtung 40 im geschlossenen Zustand des Gepäckstücks 1 verhindert wird.

## Patentansprüche

1. Verfahren zum Identifizieren eines Fluggepäckstücks (1), insbesondere eines Koffers, durch
- Aktivieren einer in dem Fluggepäckstück (1) integrierten, als elektronischer tag ausgeführten, elektronischen Displayeinrichtung (8) zum Versetzen des Displays in Empfangsbereitschaft,
- Übertragen von für einen Flug notwendigen Flug- und Personendaten von einer Eincheckeinrichtung (2) an die Displayeinrichtung (8),
- grafisches Darstellen der Flug- und Personendaten auf einer Anzeigefläche (26) der Displayeinrichtung (8),
- **dadurch gekennzeichnet, dass** die elektronische Displayeinrichtung (8) mittels manueller Betätigung einer an dem Fluggepäckstück (1) angeordneten Aktivierungseinrichtung aktiviert wird,
- wobei die Aktivierungseinrichtung (40) im Inneren des Fluggepäckstücks (1) angeordnet ist,
- die Aktivierungseinrichtung (40) durch eine Abschirmeinrichtung (42) vor ungewollter Betätigung geschützt ist, wobei die Abschirmeinrichtung durch einen der Aktivierungseinrichtung (40) vorgelagerten Kanal (47) mit einer Mündung (43) gebildet ist und die Mündung des Kanals (47) der Abschirmeinrichtung (42) im geschlossenen Zustand des Gepäckstücks (1) verdeckt ist.

2. Verfahren nach Anspruch 1, **dadurch gekennzeichnet, dass** die Displayeinrichtung (8) nur innerhalb eines definierten Zeitfensters nach Aktivierung der Displayeinrichtung (8) in Empfangsbereitschaft ist.

3. Verfahren nach Anspruch 1 oder 2, **dadurch gekennzeichnet, dass** die auf der Anzeigefläche (26) der Displayeinrichtung (8) angezeigte grafische Darstellung der Flug und Personendaten für die automatische Gepäckbeförderung eingescannt werden.

4. System zum Identifizieren eines Fluggepäckstücks (1), insbesondere eines Koffers, mit
- einer Eincheckeinrichtung, auf der für einen Flug notwendige Flug- und Personendaten speicherbar sind,
- dem Fluggepäckstück mit als elektronischer tag ausgeführte, integrierter Displayeinrichtung,
- einer Aktivierungseinrichtung zum Aktivieren der in dem Fluggepäckstück integrierten Displayeinrichtung, um diese in Empfangsbereitschaft zu setzen, wobei während der Empfangsbereitschaft Flug- und Personendaten von der Eincheckeinrichtung an die Displayeinrichtung übertragbar sind,
- wobei die Flug- und Personendaten auf einer Anzeigefläche der Displayeinrichtung darstellbar sind,
- **dadurch gekennzeichnet, dass** die Aktivierungseinrichtung im Inneren des Gepäckstücks angeordnet ist und manuell betätigbar ist,
- wobei eine Abschirmeinrichtung vorgesehen ist, die die Aktivierungseinrichtung vor unbeabsichtigter Betätigung schützt, wobei die Abschirmeinrichtung durch einen der Aktivierungseinrichtung vorgelagerten Kanal mit einer Mündung gebildet ist und die Mündung des Kanals der Abschirmeinrichtung im geschlossenen Zustand des Gepäckstücks verdeckt ist.

5. System nach Anspruch 4, **dadurch gekennzeichnet, dass** die Aktivierungseinrichtung an der Displayeinrichtung, angeordnet ist.

6. Fluggepäckstück, mit einem Gepäckstückkörper, wobei eine Displayeinrichtung an dem Gepäckstückkörper angeordnet ist, wobei der Gepäckstückkörper öffnen- und schließbar ist,
wobei eine Aktivierungseinrichtung mittels der die Displayeinrichtung aktivierbar ist am Gepäckstückkörper, vorzugsweise an der Displayeinrichtung, angeordnet ist,
**dadurch gekennzeichnet, dass** die Aktivierungseinrichtung im Inneren des Gepäckstückkörpers angeordnet ist und manuell betätigbar ist, wobei eine Abschirmeinrichtung vorgesehen ist, welche die Aktivierungseinrichtung vor ungewollter Betätigung schützt, wobei die Abschirmeinrichtung durch einen der Aktivierungseinrichtung vorgelagerten Kanal mit einer Mündung gebildet ist und die Mündung des Kanals der Abschirmeinrichtung im geschlossenen Zustand des Gepäckstücks verdeckt ist.

7. Fluggepäckstück nach Anspruch 6, **dadurch gekennzeichnet, dass** der Gepäckstückkörper aus mindestens einem ersten Gepäckstückteil und mindestens einem zweiten Gepäckstückteil gebildet ist worüber das Fluggepäckstück öffnen- und schließbar ist.

8. Fluggepäckstück nach Anspruch 6 oder 7, **dadurch gekennzeichnet, dass** die Aktivierungsvorrichtung ein an der Displayeinrichtung angeordneter Knopf ist.

9. Fluggepäckstück nach einem der Ansprüche 6 bis 8, **dadurch gekennzeichnet, dass** der Kanal der Abschirmeinrichtung an dem ersten Gepäckstückteil des Gepäckstückkörpers angeordnet ist und die Mündung des Kanals im geschlossenen Zustand des Gepäckstücks durch das mindestens zweite Gepäckstückteil verdeckt ist.

10. Fluggepäckstück nach einem der Ansprüche 6 bis 9, **dadurch gekennzeichnet, dass** im geschlossenen Zustand des Gepäckstücks die Mündung durch eine Verschlusseinrichtung verdeckt ist.

11. Fluggepäckstück nach Anspruch 10, **dadurch gekennzeichnet, dass** die Verschlusseinrichtung an dem zweiten Gepäckstückteil des Gepäckstücks angeordnet ist.

## Claims

1. A method for identifying a piece of flight baggage (1), in particular a suitcase, by
- activating an electronic display means (8) in order to set the display ready for receipt, the display means being integrated in the piece of flight baggage (1) and configured as an electronic tag,
- transmitting flight and personal data necessary for a flight from a check-in means (2) to the display means (8),
- representing the flight and personal data graphically on a display surface (26) of the display means (8),
- **characterized in that** the electronic display means (8) is activated by manual activation of an activation means arranged on the piece of flight baggage (1),
- the activation means (40) being arranged inside the piece of flight baggage (1),
- the activation means (40) being protected against unintentional actuation by a shielding means (42), wherein the shielding means is formed by a channel (47) arranged in front of the activation means (40) and having an opening (43), and the channel (47) opening of the shielding means (42) is covered in the closed state of the piece of baggage (1).

2. The method of claim 1, **characterized in that** the display means (8) is ready for receipt only within a defined time window after activation of the display means (8).

3. The method of claim 1 or 2, **characterized in that** the graphic representation of the flight and personal data shown on the display surface (26) of the display means (8) are scanned for automatic baggage transportation.

4. A system for identifying a piece of flight baggage (1), in particular a suitcase, comprising:
- a check-in means on which flight and personal data necessary for a flight can be stored,
- a piece of flight baggage with an integrated display means designed as an electronic tag,
- an activation means for activating the display means integrated in the piece of flight baggage, so as to set the same ready for receipt, wherein it is possible to transmit flight and personal data from the check-in means to the display means while the same are ready for receipt,
- wherein the flight and personal data are adapted for representation on a display surface of the display means,
- **characterized in that** the activation means is arranged inside the piece of baggage and is manually actuatable,
- wherein a shielding means is provided to protect the activation means against unintentional actuation, wherein the shielding means is formed by a channel arranged in front of the activation means and having an opening, and the channel opening of the shielding means is covered in the closed state of the piece of baggage.

5. The system of claim 4, **characterized in that** the activation means is arranged on the piece of baggage.

6. A piece of flight baggage, comprising a body of a piece of baggage, wherein a display means is arranged on the body of the piece of baggage, the body of the piece of baggage being openable and closable,
wherein an activation means, by which the display means may be activated, is arranged on the body of the piece of baggage, preferably on the display means,
**characterized in that** the activation means is arranged inside the body of the piece of baggage and is adapted for manual operation, wherein a shielding means is provided to protect the activation means against unintentional actuation, wherein the shielding means is formed by a channel arranged in front of the activation means and having an opening, and the channel opening of the shielding means is covered in the closed state of the piece of baggage.

7. The piece of flight baggage of claim 6, **characterized in that** the body of the piece of baggage is composed of at least one first part of the piece of baggage and at least one second part of the piece of baggage, whereby the piece of flight baggage may be opened and closed.

8. The piece of flight baggage of claim 6 or 7, **characterized in that** the activation means is a button arranged on the display means.

9. The piece of flight baggage of one of claims 6 to 8, **characterized in that** the channel of the shielding means is arranged on the first part of the body of the piece of baggage, and the channel opening is covered by the at least one second part of the piece of baggage when the piece of baggage is in the closed state.

10. The piece of flight baggage of one of claims 6 to 9, **characterized in** the closed state of the piece of baggage, the opening is covered by a closing means.

11. The piece of flight baggage of claim 10, **characterized in that** the closing means is arranged on the second part of the piece of baggage.

## Revendications

1. Procédé d'identification d'un bagage d'avion (1), en particulier d'une valise, par
- activation d'un dispositif d'affichage électronique (8) intégré dans le bagage d'avion (1), réalisé comme étiquette électronique, afin de mettre l'affichage en disponibilité de réception,
- transmission au dispositif d'affichage (8) de données de vol et personnelles nécessaires pour un vol depuis un dispositif d'enregistrement (2),
- représentation graphique des données de vol et personnelles sur une surface d'affichage (26) du dispositif d'affichage (8),
- **caractérisé en ce que** le dispositif d'affichage électronique (8) est activé au moyen de l'actionnement manuel d'un dispositif d'activation disposé sur le bagage d'avion (1),
- dans lequel le dispositif d'activation (40) est disposé à l'intérieur du bagage d'avion (1),
- le dispositif d'activation (40) est protégé contre un actionnement intempestif par un dispositif de protection (42), dans lequel le dispositif de protection est formé par un canal (47), doté d'une embouchure (43), en amont du dispositif d'activation (40) et l'embouchure du canal (47) du dispositif de protection (42) est recouverte dans l'état fermé du bagage (1) .

2. Procédé selon la revendication 1, **caractérisé en ce que** le dispositif d'affichage (8) n'est en disponibilité de réception que pendant un intervalle de temps défini après activation du dispositif d'affichage (8) .

3. Procédé selon la revendication 1 ou 2, **caractérisé en ce que** la représentation graphique des données de vol et personnelles affichée sur la surface d'affichage (26) du dispositif d'affichage (8) est scannée pour le transport des bagages automatique.

4. Système d'identification d'un bagage d'avion (1), en particulier d'une valise, avec
- un dispositif d'enregistrement, sur lequel des données de vol et personnelles nécessaires pour un vol peuvent être conservées,
- le bagage d'avion doté d'un dispositif d'affichage intégré réalisé comme étiquette électronique,
- un dispositif d'activation pour activer le dispositif d'affichage intégré au bagage d'avion, afin de mettre celui-ci en disponibilité de réception, dans lequel des données de vol et personnelles peuvent être transmises du dispositif d'enregistrement au dispositif d'affichage pendant la disponibilité de réception,
- dans lequel les données de vol et personnelles peuvent être représentées sur une surface d'affichage du dispositif d'affichage,
- **caractérisé en ce que** le dispositif d'activation est disposé à l'intérieur du bagage et est manuellement actionnable,
- dans lequel est prévu un dispositif de protection protégeant le dispositif d'activation contre un actionnement accidentel, dans lequel le dispositif de protection est formé par un canal, doté d'une embouchure, en amont du dispositif d'activation et l'embouchure du canal du dispositif de protection est recouverte dans l'état fermé du bagage.

5. Système selon la revendication 4, **caractérisé en ce que** le dispositif d'activation est disposé sur le dispositif d'affichage.

6. Bagage d'avion avec un corps de bagage, dans lequel un dispositif d'affichage est disposé sur le corps de bagage, dans lequel le corps de bagage peut être ouvert et fermé, dans lequel un dispositif d'activation, au moyen duquel le dispositif d'affichage est activable, est disposé sur le corps de bagage, de préférence sur le dispositif d'affichage,
**caractérisé en ce que** le dispositif d'affichage est disposé à l'intérieur du corps de bagage et est actionnable manuellement, dans lequel est prévu un dispositif de protection qui protège le dispositif d'activation contre un actionnement intempestif, dans lequel le dispositif de protection est formé par un canal, doté d'une embouchure, en amont du dispositif d'activation et l'embouchure du canal du dispositif de protection est recouverte dans l'état fermé du bagage.

7. Bagage d'avion selon la revendication 6, **caractérisé en ce que** le corps de bagage est formé d'au moins une première pièce de bagage et d'au moins une deuxième pièce de bagage par le biais desquelles le bagage d'avion peut être ouvert et fermé.

8. Bagage d'avion selon la revendication 6 ou 7, **caractérisé en ce que** le dispositif d'activation est un bouton disposé sur le dispositif d'affichage.

9. Bagage d'avion selon l'une des revendications 6 à 8, **caractérisé en ce que** le canal du dispositif de protection est disposé sur la première pièce de bagage du corps de bagage et l'embouchure du canal est recouverte par l'au moins une deuxième pièce de bagage dans l'état fermé du bagage.

10. Bagage d'avion selon l'une des revendications 6 à 9, **caractérisé en ce que** l'embouchure est recouverte par un dispositif de fermeture dans l'état fermé du bagage.

11. Bagage d'avion selon la revendication 10, **caractérisé en ce que** le dispositif de fermeture est disposé sur la deuxième pièce de bagage du bagage.
